# EUROPEAN PATENT SPECIFICATION

(11) **EP 3 670 106 B1**
(45) Date of publication and mention of the grant of the patent: **15.05.2024**
(21) Application number: 18213367.8
(22) Date of filing: 18.12.2018
(51) Int. Cl.: B25J 9/16, G06V 10/82

(54) **TASK-SPECIFIC ROBOT GRASPING SYSTEM AND METHOD**
AUFGABENSPEZIFISCHES ROBOTERGREIFSYSTEM UND -VERFAHREN
SYSTÈME ET PROCÉDÉ DE PRÉHENSION ROBOTIQUE SPÉCIFIQUES À UNE TÂCHE

(43) Date of publication of application: 24.06.2020
(73) Proprietor: Siemens Aktiengesellschaft, 80333 München (DE)
(72) Inventor: SOLOWJOW, Eugen, Berkeley, CA 94709 (US); CLAUSSEN, Heiko, North Brunswick, NJ 08902 (US); SEHR, Martin, Kensington CA 94707 (US); WEN, Chengtao, Redwood City, CA 94065 (US); APARICIO OJEA, Juan L., Moraga CA 94556 (US)
(74) Representative: Patentanwaltskanzlei WILHELM & BECK

(56) References cited:
- WO-A1-2016/100235
- WO-A1-2018/160163
- CN-A- 108 247 601
- JP-A- 2014 205 209
- US-A1- 2013 211 593
- US-A1- 2017 252 924
- KUAN FANG ET AL: "Learning Task-Oriented Grasping for Tool Manipulation from Simulated Self-Supervision", ARXIV.ORG, CORNELL UNIVERSITY LIBRARY, 201 OLIN LIBRARY CORNELL UNIVERSITY ITHACA, NY 14853, 25 June 2018 (2018-06-25), XP080894060,

## Description

### TECHNICAL FIELD

The present disclosure is directed, in general, to a system and method for automatically selecting the optimum grasping position of an object by a robot, and more specifically to such a system that uses upcoming activities as a parameter in selecting the grasping position.

### BACKGROUND

Automation of tasks such as assembly, warehouse stocking, packaging, and the like are being increasingly performed by robots. Robots have proven effective at performing repetitive tasks with little or no user intervention. However, as the tasks performed by the robots become increasingly diverse, additional programing of the robots becomes necessary to assure proper operation. The additional programming can become overly-burdensome and complex in situations where each object handled by the robot is randomly delivered from a number of options or where the task to be performed with each object can differ.
US 2013/0211593 A1 discloses a work piece thick-up apparatus, comprising: a hand for gripping a single work piece from an object containing a plurality of bulked work pieces; a robot for bringing the hand into a gripping position or posture that is desired; a sensor for performing three-dimensional measurement of the work piece to obtain work piece measurement data; a storage medium for accumulating at least hand profile data; an information processing unit for calculating the gripping position or a posture based on data from the sensor and data from the storage medium; and a control unit for controlling a robot based on the gripping position or a posture calculated by the information processing unit, wherein the information processing unit comprises an optimum gripping candidate creating section for directly deriving the gripping position or posture based on the work piece measurement data and the hand profile data, and wherein a line-off-side direction of the sensor is aligned with an entranced direction at a time when the hand approach is the work piece to pick up the single work piece from the object containing the plurality of bulked work pieces.

There is an optimum-gripping candidate grating section, which includes a gripable feature extracting section, a hand matching section, and a gripping posture candidate selecting section. The gripable feature extracting section extracts gripable features from the work piece measurement data of the sensor. The hand matching section matches the hand profile data accumulated in the storage medium with the features extracted by the gripable feature extracting section to dynamically create a plurality of gripping position / posture candidates.

The gripping posture candidate selecting section selects, from among the gripping position / posture candidates created by the hand-matching section, a gripping position or posture which enables the easiest gripping. For example, in the case of the suction-attraction type, the candidate is set to a portion having a high degree of matching between the model and the feature point group, but a matching score of the candidate is decreased when the degree of matching with the model is low due to a small surface of the feature or a whole formed in the surface of the feature. The hand matching section calculates gripping positions or postures each having the highest matching score for the plurality of features extracted by the gripable feature extracting section, and sets the plurality of gripping positions or postures as the gripping position / posture candidates.

US 2017/0252924 A1 discloses a deep machine learning method and apparatus related to manipulation of an object by an end effector of a robot. Some implementations are directed to training a grasp deep neural network, such as a convolutional neural network to predict the probability that candidate motion data for an endefactor of a robot will result in a successful grasp of one or more objects by the end effector and/or to predict spacial transformation parameters for a spacial transformer network. For example, some implementations enable applying, as input to a trained grasp deep neural network, at least: a candidate motion vector that defines a candidate motion of a grasping endefactor of a robot and an image that captures at least a portion of the work space of a robot; and generating, based on the applying: a measure the directly or indirectly indicates the probability that the candidate motion vector will result in a successful grasp; and/or spacial transformation parameters that indicate a location in the image toward which the grasping endefactor will move.

US 2013/0211593 A1 discloses a work piece thick-up apparatus, comprising: a hand for gripping a single work piece from an object containing a plurality of bulked work pieces; a robot for bring the hand into a gripping position or posture that is desired; a sensor for performing three-dimensional measurement of the work piece to obtain work piece measurement data; a storage medium for accumulating at least hand profile data; an information processing unit for calculating the gripping position or a posture based on data from the sensor and data from the storage medium; and a control unit for controlling a robot based on the gripping position or a posture.

KUAN FANG ET AL: "Learning Task-Oriented Grasping for Tool Manipulation from Simulated Self-Supervision", ARXIV.ORG, CORNELL UNIVERSITY LIBRARY, 201 OLOIN LIBRARY CORNELL UNIVERSITY ITHACA, NY 14853, 25 June 2018 discloses a learning task-oriented grasping for tool manipulation from simulated self-supervision. A robot operable is disclosed, wherein the robot comprising: a grip movable between an open position and a closed position to grasp anyone of a plurality of the objects; an articulatable portion coupled to the gripper and operable to move the grip to a desired position; an object detection system operable to capture images indicative of the shape of a first object of the plurality of objects positioned to be grasped by a gripper; and a computer connected to the object detection system, the computer is operable to identify a grasp success metric depending on the space of possible grasps and the robustness of a grasp. The grasps success metric is optimized considering the best task policy.

### SUMMARY

The invention is defined in the appended claims.

A robot operable within a 3-D volume includes a gripper movable between an open position and a closed position to grasp any one of a plurality of objects, an articulatable portion coupled to the gripper and operable to move the gripper to a desired position within the 3-D volume, and an object detection system operable to capture information indicative of the shape of a first object of the plurality of objects positioned to be grasped by the gripper. A computer is coupled to the object detection system. The computer is operable to operate a neural network to analyze the image and to generate a plurality of possible grasp locations on the first object for consideration. The computer is operable to generate a numerical parameter indicative of the desirability of each grasp location, wherein the numerical parameter is at least partially defined by the next task to be performed by the robot.

In another construction, a robot operable within a 3-D volume includes a gripper movable between an open position and a closed position to grasp any one of a plurality of objects, an articulatable portion coupled to the gripper and operable to move the gripper to a desired position within the 3-D volume, and an imaging system operable to capture an image of a first object of the plurality of objects which is positioned to be grasped by the gripper. A computer is coupled to the imaging system and includes a neural network that identifies a plurality of possible grasp locations on the first object, and that determines a numerical parameter of the desirability of each grasp location, wherein the numerical parameter is at least partially defined by the next task to be performed by the robot, and the arrangement of the gripper, and wherein a portion of the plurality of possible grasp locations are eliminated at least partially in response to an available movement path of the gripper and the articulatable portion within the 3-D volume.

In another construction, a method of gripping an object with a robot that is movable within a 3-D volume includes connecting a gripper that is movable between an open position and a closed position to an articulatable portion of the robot, capturing an image of the object to be grasped, and operating a neural network on a computer to analyze the image and generate a plurality of possible grasp locations for consideration. The method also includes assigning a numerical parameter indicative of the desirability of each grasp location to each grasp location, wherein the numerical parameter is at least partially defined by the next task to be performed by the robot, selecting the most desirable grasp location based on the numerical parameter, and grasping the object in the selected grasp location.

### BRIEF DESCRIPTION OF THE DRAWINGS

Fig. 1 is a schematic illustration of a robot grasping system.
Fig. 2 is a perspective view of a possible item to be grasped.
Fig. 3 is a gripper from the robot of Fig. 1 grasping the item of Fig. 2 in one possible grasp location.
Fig. 4 is the gripper from the robot of Fig. 1 grasping the item of Fig. 2 in another possible grasp location.
Fig. 5 is a schematic flow chart illustrating the operation of the gripping system.
Fig. 6 is a flow chart illustrating a method of selecting a grasp location.
Fig. 7 is a perspective view illustrating the placement of an object in a partially filled volume.
Fig. 8 is a perspective view illustrating the placement of the object of Fig. 7 into the same volume as illustrated in Fig. 7 but partially filled in a different manner.
Fig. 9 is a perspective view illustrating the placement of the object of Fig. 7 into the same volume as illustrated in Fig. 7 but partially filled in a different manner.
Fig. 10 is a perspective view of an assembled gear arrangement.

### DETAILED DESCRIPTION

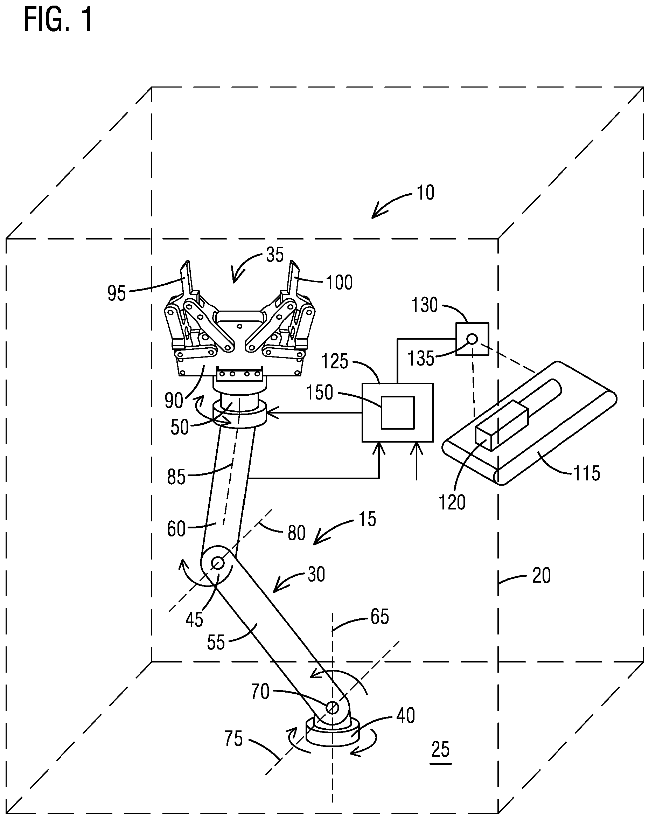

Fig. 1 schematically illustrates an automated system 10 that includes a robot 15 that is movable within a 3-D volume 20 or operating envelope. The robot 15 in Fig. 1 is fixedly attached to a floor 25 or base and includes an articulatable portion 30 and a gripper 35 attached to the articulatable portion 30. The articulatable portion 30 includes a shoulder joint 40, an elbow joint 45, a wrist joint 50, a first arm 55 extending between the shoulder joint 40 and the elbow joint 45, and a second arm 60 extending between the elbow joint 45 and the wrist joint 50. The shoulder joint 40 provides for rotation of the first arm 55 around a first axis 65 that extends vertically through the shoulder join 40t. The shoulder joint 40 also includes a pivot joint 70 that allows the first arm 55 to pivot about a second axis 75 that is normal to the first axis 65 and that passes through the pivot point. The elbow joint 45 includes a pivot point that allows for pivoting motion of the second arm 60 with respect to the first arm 55 about a third axis 80 that is normal to the first axis 65. The third axis 80 can be oriented at any desired angle with respect to the second axis 75 to provide the desired range of motion at the elbow joint 45. The wrist joint 50 connects the second arm 60 to the gripper 35 and provides for relative rotation between the gripper 35 and the second arm 60 about a fourth axis 85 that extends along the length of the second arm 60. The elbow joint 45 can also include a pivot joint to allow the gripper 35 to pivot with respect to the second arm 60.

The gripper 35 includes a body 90 that connects to the wrist joint 50, a first finger 95 and a second finger 100. The first finger 95 and the second finger 100 each include an engagement surface 105 arranged to grasp various objects. The first finger 95 and the second finger 100 attach to the body 90 and are movable between an open position in which the engagement surfaces 105 of the first finger 95 and the second finger 100 are spaced apart from one another and a closed position in which the engagement surfaces 105 of the first finger 95 and the second finger 100 are either in contact with one another or spaced very close to one another. In the illustrated construction, two linkages 110 interconnect the first finger 95 and the second finger 100 to the body 90. The linkages 110 are arranged to assure that the engagement surfaces 105 remain substantially parallel to one another while in any position between the open position and the closed position.

As one of ordinary skill will realize, there is great variation in the design of the gripper 35 available in the robot arts. Grippers could include fingers 95, 100 that move linearly on a screw mechanism or could include fingers 95, 100 that pivot and do not remain parallel. Entirely different gripper mechanisms such as vacuum systems, magnetic systems, three or more finger systems, etc. could also be employed. In addition, many different arrangements are available for the articulatable portion including linear motion robots, fewer joints or more joints, etc. The actual design of the articulatable portion 30 and the gripper 35 are not critical to the invention so long as the articulatable portion 30 is able to move the gripper 35 into desired locations and orientations and the gripper 35 is able to grip multiple different objects in different ways.

As discussed, the robot 15, and specifically the articulatable portion 30 and the gripper 35 are movable to any point within the predefined 3-D volume 20 to pick up an object or perform a particular task. Each robot 15 has a predefined limit of motion that is well-known and is a function of the construction of the robot 15.

With continued reference to Fig. 1, a conveyor system 115 is shown conveying an object 120 into the 3-D volume 20 of the robot 15. The robot 15 is positioned to grasp the object 120 and then perform a secondary task with the object 120. The secondary task could be to package the object 120 for shipping, place the object 120 in a machine tool or into storage, perform an assembly task such as attaching the object 120 to another component or part, and the like. Virtually any secondary task could be accommodated. While the conveyor system 115 is illustrated in Fig. 1, the object 120 could be delivered to the robot 15 using any available system or arrangement.

A computer 125 is connected to the robot 15 to control the movement of the robot 15. The computer 125 receives feedback from various sensors on the robot 15 and in the related systems and generates control signals to move the articulatable portion 30 and the gripper 35 as required for a particular operation. The computer 125 also receives user input such as manufacturing plans, customer orders, and the like such that the computer 125 includes the next step for any given object 120 that is delivered on the conveyor system 115.

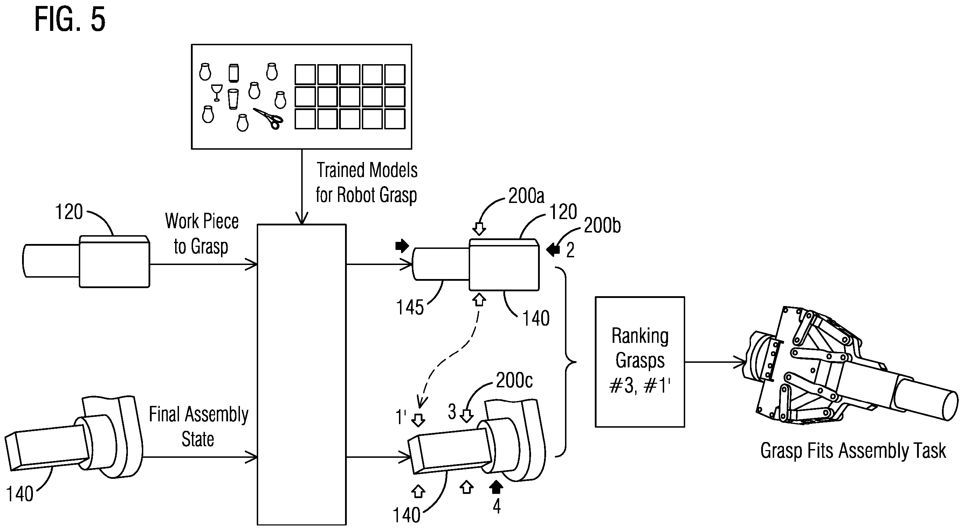

An object detection system 130 is also connected to the computer 125 and positioned to detect objects 120 on the conveyor 115 and within the 3-D volume 20. The object detection system 130 detects more than the presence of the object 120. Rather, the object detection system 130 detects what the object 120 is. In one construction, the object detection system 130 includes an imaging system 135 that captures a still image of the object 120. The still image is sent to the computer 125 and the computer 125 analyzes the image to determine what object 120 is in position to be grasped. In other constructions, other detection systems 130 may be employed. For example, one system 130 could read an RFID, bar code, or other indicator attached to or proximate the object 120 and send that information to the computer 125 to identify the object 120. For object detection systems 130 that do not capture an image of the object 120, images would need to be available to the computer 125 for each possible object 120. The images would be associated with the object 120 and used to determine grasp locations as will be discussed with regard to Fig. 5.

The software aspects of the present invention could be stored on virtually any computer readable medium including a local disk drive system, a remote server, internet, or cloud-based storage location. In addition, aspects could be stored on portable devices or memory devices as may be required. The computer 125 generally includes an input/output device that allows for access to the software regardless of where it is stored, one or more processors, memory devices, user input devices, and output devices such as monitors, printers, and the like.

The processor could include a standard micro-processor or could include artificial intelligence accelerators or processors that are specifically designed to perform artificial intelligence applications such as artificial neural networks, machine vision, and machine learning. Typical applications include algorithms for robotics, internet of things, and other data-intensive or sensor-driven tasks. Often AI accelerators are multi-core designs and generally focus on low-precision arithmetic, novel dataflow architectures, or in-memory computing capability. In still other applications, the processor may include a graphics processing unit (GPU) designed for the manipulation of images and the calculation of local image properties. The mathematical basis of neural networks and image manipulation are similar, leading GPUs to become increasingly used for machine learning tasks. Of course, other processors or arrangements could be employed if desired. Other options include but are not limited to field-programmable gate arrays (FPGA), application-specific integrated circuits (ASIC), and the like.

The computer 125 also includes communication devices that may allow for communication between other computers or computer networks, as well as for communication with other devices such as machine tools, work stations, actuators, controllers, sensors, and the like.

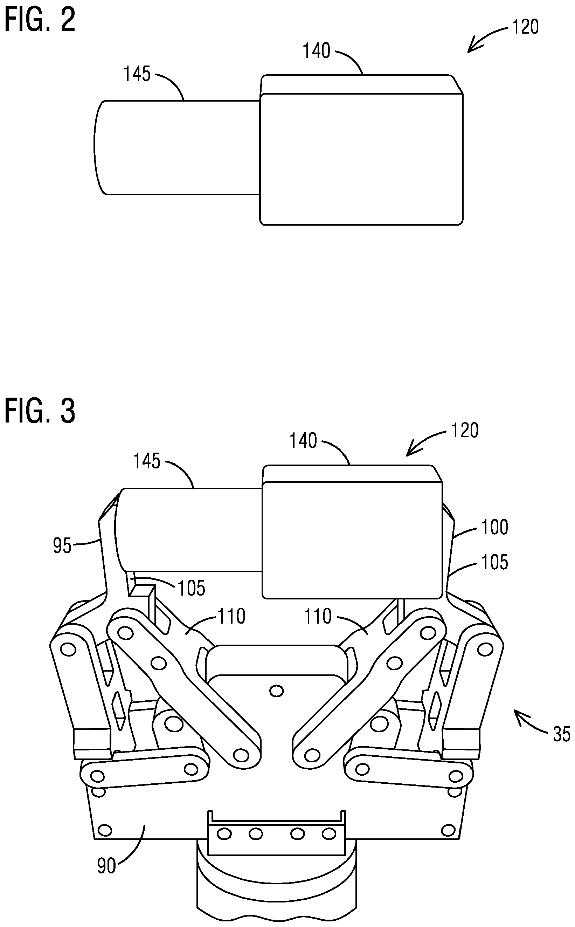

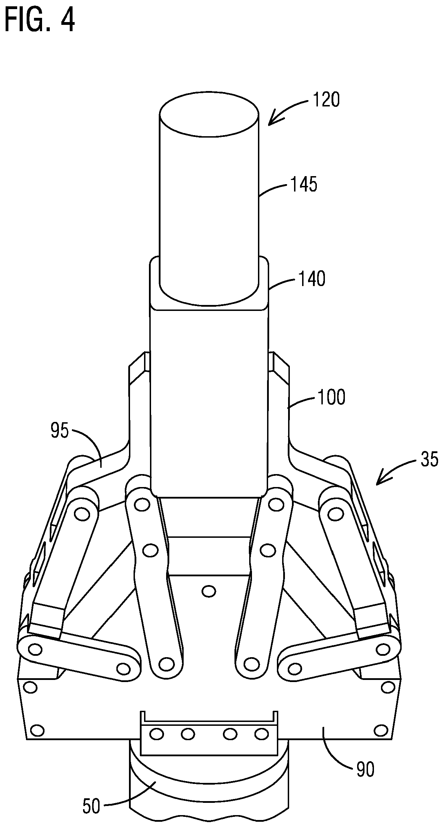

Fig. 2 illustrates an example of an object 120, part, or component, to be grasped. The object 120 includes a first portion 140 having a rectangular cross section that extends along a length. A second portion 145 extends from an end of the first portion 140 and has a circular cross section. The object 120 of Fig. 2 can be grasped in a number of different ways by the robot 15 of Fig. 1. Fig. 3 illustrates one possible grasp arrangement in which the gripper 35 is positioned near the open position and the first finger 95 and second finger 100 engage the exposed ends of the first portion 140 and the second portion 145. Fig. 4 illustrates a second grasp arrangement in which the gripper 35 engages two parallel sides of the first portion 140. As one of ordinary skill will realize, there are many different ways to grasp the object 120 of Fig. 2.

In many applications, the robot 15 may be used to grasp the object 120 and then perform a task with that object 120. In repetitious tasks where the same object 120 is repeatedly grasped with the same task then being performed with the object 120, the robot 15 can simply be programed to perform the grasp and task. However, more flexible systems are needed when any one of a large number of objects 120 may appear on the conveyor 115 and each object 120 may have a different task to be performed depending on the object 120. In systems like this, straightforward programming of the robot 15 may be prohibitive.

The computer 125 illustrated in Fig. 1 includes a neural network model 150 capable of deep learning that is used to determine how to grasp the object 120 identified by the object detection system 130. The neural network model 150 is trained using an existing database such as Dex-Net 2.0 provided by Berkeley Artificial Intelligence Research (BAIR) or other such databases to recognize different shapes and to determine different possible grasp locations.

Once trained, the computer 125 uses the captured image, or an otherwise obtained image of the object 120 to determine possible grasp locations, to estimate the quality of each grasp location, and to assign a numerical parameter indicative of that quality. For example, the computer 125 could assign a value between 0 and 100 with 100 being the best possible grasp location.

Thus, the system described herein determines optimal grasping locations without pre-programing of the computer 125. Possible grasp positions can be found on the edges of the object 120 to be grasped. The search for the optimal grasp location can be implemented by a genetic algorithm like a particle filter motivated approach. That is, grasp candidates are uniformly sampled on the edges, when a good grasp is found there is a high likelihood that other grasp candidates are generated with a gaussian distribution in its proximity. If a grasp candidate is bad, the candidate is forgotten and no "offsprings" are generated in its proximity. This process is continued to iteratively find the best grasp candidate or candidates.

As illustrated in Fig. 5, the trained neural network model 150 uses an image of the object 120 to be grasped to select a number of different candidate grasp locations. Fig. 5 illustrates three possible grasp locations labelled 200a, 200b, and 200c. To enhance production rates, data regarding the gripper 35 is also provided to the computer 125 and accounted for in the analysis of the candidate grasp locations. Any possible grasp locations that require the gripper 35 to move to a point that is not between the open position and the closed position are either weighted very low or preferably eliminated from consideration. Similarly, data regarding the particular robot 15 being used is provided to the computer 125 to define the 3-D volume 20 in which the robot 15 can work. This 3-D volume 20 could be further limited by specific limitations within a particular application. For example, one robot may be capable of moving over a walkway, but it may be undesirable to allow it to do so. In this case, the walkway can be omitted from the 3-D volume of the robot. Any possible grasp locations that require the robot 15 to move to a point that is outside of the 3-D volume 20 are either weighted very low or preferably eliminated from consideration.

The computer 125 is also provided with data regarding the next step to be performed with the particular object 120. In one construction, the computer 125 includes a database of next tasks that are each associated with a different potential object 120 to be grasped. The next task could be assembly related, could require the packaging of the object 120, could require the placement of the object 120 in a machine tool, or could include another task.

The next task acts as a further constraint that is analyzed by the computer 125 to adjust the numerical parameter. For example, Fig. 5 illustrates that the next step for the object 120 of Fig. 2 is an assembly step in which the second portion 145 is inserted into an aperture to attach the object 120 to another component. With this constraint, the grasping position illustrated in Fig. 3 receives a very low numerical parameter while the position illustrated in Fig. 4 receives a higher numerical parameter. Fig. 5 illustrates several possible grasping positions 200a, 200b, and 200c that can be used by the gripper 35 to grasp an object 120. Fig. 3 illustrates one possible grasping position 200b, with Fig. 4 illustrating a second grasping position 200c. Grasping position 200a is another grasping position in which the gripper 35 grasps the first portion 140 of the object 120 but is rotated ninety degrees with respect to the position illustrated in Fig. 4. More specifically, as illustrated in Fig. 4, the long axis of the object 120 extends away from the robot when using the gripping position 200c. However, 200a is meant to illustrate a grasping position in which the gripper 35 crosses the long axis of the object 120. This grasping position is similar in quality to the grasping position illustrated in Fig. 4. However, in this position, the gripper 35 can interfere with the assembly step. Thus, this gripping position is given a lower numeric parameter based on the constraint provided by the next step.

With the evaluation of candidate gripping positions complete, the computer 125 selects the most desirable gripping position and provides the necessary instructions to the robot 15 to grasp the object 120 as desired and perform the assembly step.

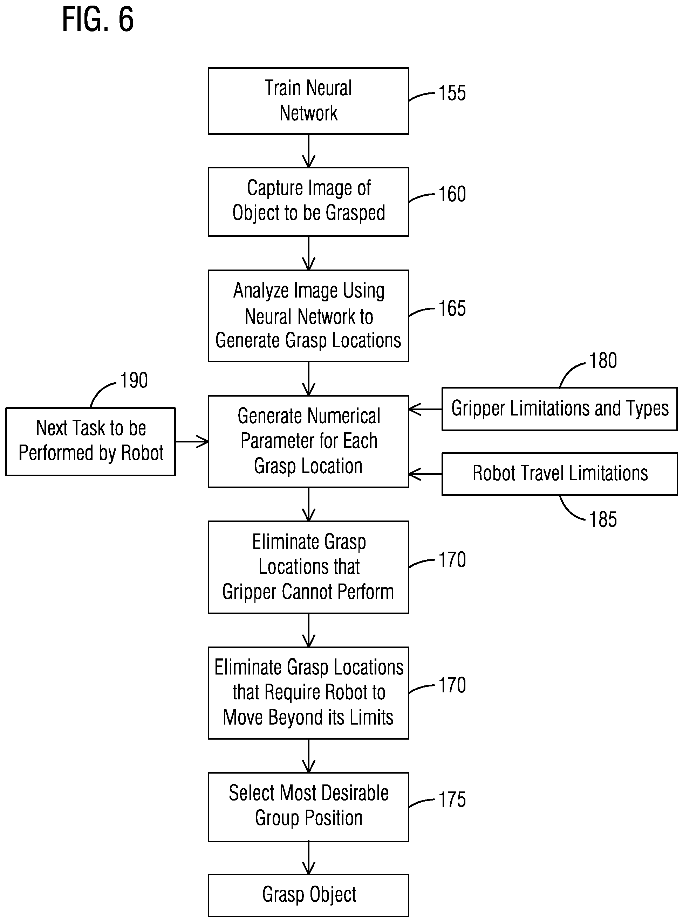

In use and as illustrated in Fig. 6, a user first trains (step 155) the neural network model 150 in the computer 125 to recognize different shapes and potential grasping positions. Next, an image of an object to be grasped is generated or accessed (step 160). In systems 10 that image the object 120 to determine what the object 120 is, that image can be used. In systems 10 that determine what the object 120 is in another way, a database of images is needed to provide the necessary image to the neural network model 150 so that it can apply what it has previously learned to determine how to grasp the object. The computer 125 uses the neural network model 150 to analyze the image and generate potential grasping locations 165. The computer 125 uses information about the gripper 35 (block 180) and the robot (block 185) to generate a numerical parameter for each grasp location 191 and to eliminate grasping positions 170 that cannot be performed by either the gripper 35 or the articulating portion 30 of the robot 15. The next task to be performed by the robot 15 is either provided by a user or extracted from a database or other source based on the identification of the object 120 being grabbed (block 190). The next task is used to weight the numerical parameter such that gripping positions that don't facilitate the next step receive a lower numerical parameter than gripping positions that better facilitate the next step.

The numerical parameter is used to select the most desirable gripping position 175. The computer 125 provides the necessary commands to the robot 15 to cause the robot 15 to grab the object 120 using the selected gripping position and to perform the next task.

In yet another application, a robot is used to pack a bin or other storage space 210 having a fixed volume. When packing a bin or other volume, objects of different sizes, shapes, or volumes must be packed into a finite number of bins or containers, so as to minimize the number of bins used or maximize the number of objects packed in the volume. A variant of bin packing that occurs in practice is when the packing is constrained by size, by weight, by cost, etc. Bin or volume packing is important in industrial and commercial applications, in logistics, supply chain management and manufacturing, such as loading trucks with weight capacity constraints, filling containers, storing goods in warehouses, and cutting raw materials. Robotic bin packing requires industrial robots to implement an optimized bin packing strategy, i.e. grasping and packing the objects in the desired poses (e.g. locations and orientations).

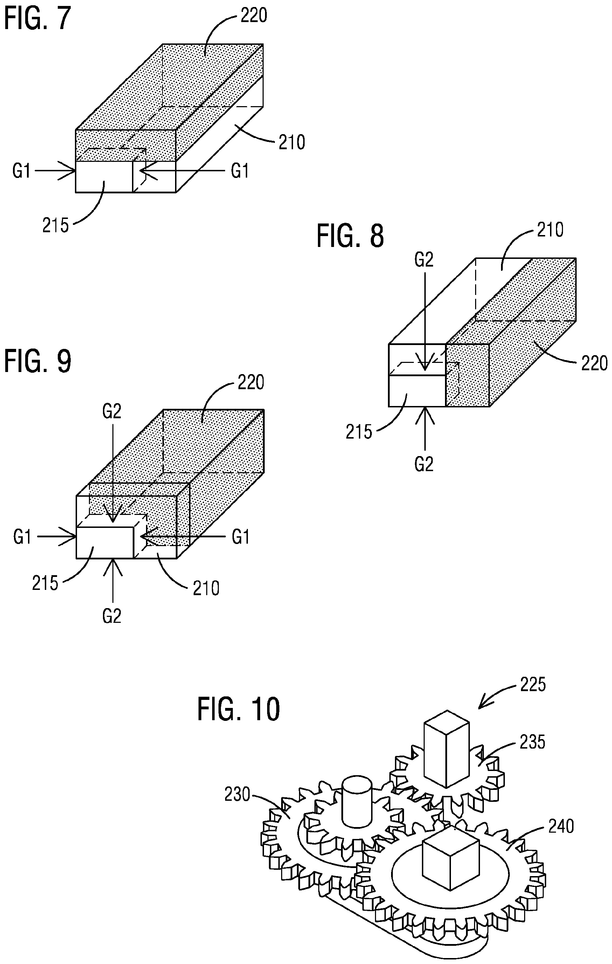

Task-specific grasping will significantly boost the efficiency of robotic bin packing. In order to implement the optimal bin packing strategy, each grasping and packaging operation is dependent on the previous operation or operations as well as subsequent operations. Therefore, the proposed method may calculate different but more efficient task-relevant grasping points for the same object depending on the available storage geometry or space. Thus, the same object may be grasped one way to place a first object in a bin and a second way to place a second object in the bin. Figs. 7-9 illustrates a simple example of a bin packing problem in which a cube-shaped object 215 is being packed into a partially filled or otherwise restricted volume 210. In Fig. 7, the top half of the volume is filled 220 or otherwise blocked such that the object 215 must be placed beneath this blocked space 220. For this case, the best grasping locations are illustrated with arrows G1. In Fig. 8, the same object 215 is being placed in the same volume 210 with the right half of the volume 220 being blocked or otherwise occupied. In this situation, the grasping location of Fig. 7 (G1) is not suitable and instead, a second grasping location illustrated with arrows G2 in Fig. 8 is used. Fig. 9 illustrates a third situation in which the back portion of the volume 220 is occupied or otherwise blocked, thereby leaving room for the object 215 in the front of the volume 210. In this case, the object 215 could be grasped using either the grasp location of Fig. 7 (G1) or the grasp location of Fig. 8 (G2). Other constraints or limitations would be used to ultimately determine which of the possibilities should be employed.

Future manufacturing will move towards higher level of automation, e.g. mass customization require manufacturing in small production volumes and with high product variability. Future manufacturing automation systems will need the ability to adapt to changing complex environments. In many autonomous manufacturing tasks, grasping and assembling operations are dependent on the sequence of manufacturing operations, which are task relevant.

Fig. 10 illustrates a gear assembly 225 in which the robot must grasp and assemble the set of gears with different sizes and geometries on the gear holders of different shapes. The first gear 230 to be assembled is a double-layered gear on a round holder. The teeth of a second gear 235 and a third gear 240 must match those of the adjoining gear 230 or other gears. Task-specific grasping points are needed to perform the gear assembly task. This implies that both gear geometry and final assembled position will be used to generate candidate grasp locations.

Task-specific grasping can also be used to automatically select between different types of grippers. Traditional grippers can be categorized as magnetic, vacuum, mechanical collet-type, and mechanical gripper-type. Magnetic grippers are typically used for lifting and moving ferromagnetic pieces such as steel sheets, blanks, and stamped parts. Vacuum (suction) grippers can be used for grasping non-ferrous objects where a magnetic gripper might otherwise be suitable. Multi-finger mechanical grippers are the most popular mechanical grippers. Two-finger grippers can grasp and handle a wide range of objects with good precision as illustrated in Figs. 1-6, but they can be of low efficiency when changing part size or geometry. Three-fingered grippers can be more precise and can handle more diverse part sizes and shapes, but they are generally more expensive and complicated.

When multiple grippers are available, the system described herein can evaluate the different possible grasps for each possible gripper to determine the most efficient way to grasp an object and perform a subsequent step or steps with that object. For a given task and object, the system first evaluates all possible grasping locations for all available grippers. The system selects the best grasping location and thereby, the best gripper for the task. In another arrangement, the system first selects the most desirable gripper. The system then calculates a set of potential grasping locations using the selected gripper.

As an example, the gear assembly 225 of Fig. 10 can be assembled using multiple different grippers. A three-finger gripper can be used to assemble the first gear 230 (double-layered on round holder). Next, a vacuum gripper could be used to assemble the smallest gear 235 (with a single small square hole in the center).

The system described herein improves the art of robotics and more specifically the use of robots in grasping applications. By accounting for the upcoming tasks in making grasping decisions, the efficiency of the complete assembly process can be improved.

## Claims

1. A robot (15) operable within a 3-D volume (20), the robot (15) comprising:
a gripper (35) movable between an open position and a closed position to grasp any one of a plurality of objects (120);
an articulatable portion (30) coupled to the gripper (35) and operable to move the gripper (35) to a desired position within the 3-D volume (20);
an object detection system (130) configured to capture information indicative of the shape of a first object (120) of the plurality of objects positioned to be grasped by the gripper (35), wherein the object detection system (130) includes an imaging system (135) configured to capture an image of the first object (120) ; and
a computer (125) coupled to the object detection system, whereby the computer (125) is configured to operate a neural network to analyze the image of the first object (120) and to generate a plurality of possible grasp locations on the first object (120) for consideration, the computer (125) is configured to generate a numerical parameter indicative of the desirability of each grasp location, wherein the numerical parameter is at least partially defined by the next task to be performed by the robot (15),
wherein the numerical parameter is at least partially defined by the arrangement of the gripper (35), and wherein the computer is configured to eliminate a portion of the plurality of possible grasp locations at least partially in response to an available movement path of the gripper (35) and the articulatable portion within the 3-D volume (20), wherein the neural network in the computer is trained by a user to recognize different shapes and potential grasping positions the imaging system (135) is configured to subsequently generate or the computer (125) is configured to subsequently access the image of the object to be grasped, the computer (125) is configured to subsequently use information about the gripper (35) and the robot (15) to generate a numerical parameter for each grasp location (191) and to eliminate grasping positions (170) that cannot be performed by either the gripper (35) or the articulating portion (30) of the robot (15), the computer (125) is configured to subsequently either receive by a user or extract from a database or other source the next task to be performed by the robot based on the identification of the object (120) being grabbed,
**characterised in that** the robot is configured to be used to pack a bin or other storage space (210) having a fixed volume, wherein when packing a bin or other volume, objects of different sizes, shapes, or volumes must be packed into a finite number of bins or containers, so as to minimize the number of bins used or maximize the number of objects packed in the volume, wherein robotic bin packing requires industrial robots to implement an optimized bin packing strategy, i.e. grasping and packing the objects in the desired poses,
wherein in order to implement the optimal bin packing strategy, each grasping and packaging operation is dependent on the previous operation or operations as well as subsequent operations, wherein different but more efficient task-relevant grasping points for the same object depending on the available storage geometry or space are calculated by the computer (125), wherein the same object may be grasped one way to place a first object in a bin and a second way to place a second object in the bin.

2. The robot of claim 1, wherein the computer (125) is configured to eliminate any possible grasp locations that require the gripper (35) to move to a position that is not between the open position and the closed position.

3. The robot of claim 1, wherein the numerical parameter is defined by an available movement path of the gripper (35) and the articulatable portion within the 3-D volume (20).

4. The robot of claim 1, wherein the computer (125) is configured to eliminate any possible grasp locations that require movement of the gripper (35) or the articulatable portion along a path that is not within the 3-D volume (20) and/or, wherein the next task is an assembly task in which the first part is attached to another component.

5. The robot of claim 1, wherein the next task is used to weight the numerical parameter such that gripping positions that don't facilitate the next step receive a lower numerical parameter than gripping positions that better facilitate the next step, wherein the numerical parameter is used to select the most desirable gripping position (175), wherein the computer (125) provides the necessary commands to the robot (15) to cause the robot (15) to grab the object (120) using the selected gripping position and to perform the next task.

6. A method of gripping an object with a robot that is movable within a 3-D volume, the method comprising:
connecting a gripper that is movable between an open position and a closed position to an articulatable portion of the robot;
capturing an image of the object to be grasped;
operating a neural network on a computer to analyze the image and generate a plurality of possible grasp locations for consideration;
assigning a numerical parameter indicative of the desirability of each grasp location to each grasp location, wherein the numerical parameter is at least partially defined by the next task to be performed by the robot;
selecting the most desirable grasp location based on the numerical parameter; and grasping the object in the selected grasp location,
wherein the neural network in the computer recognizes different shapes and potential grasping positions, then the image of the object to be grasped is generated or accessed, the computer uses information about the gripper and the robot to generate the numerical parameter for each grasp location and to eliminate grasping positions that cannot be performed by either the gripper or the articulating portion of the robot, then the next task to be performed by the robot is either provided by a user or extracted from a database or other source based on the identification of the object being grabbed,
wherein the next task is used to weight the numerical parameter such that gripping positions that don't facilitate the next step receive a lower numerical parameter than gripping positions that better facilitate the next step, wherein the numerical parameter is used to select the most desirable gripping position, wherein the computer provides the necessary commands to the robot to cause the robot to grab the object using the selected gripping position and to perform the next task **characterised in that** the robot is used to pack a bin or other storage space having a fixed volume,
wherein when packing a bin or other volume, objects of different sizes, shapes, or volumes must be packed into a finite number of bins or containers, so as to minimize the number of bins used or maximize the number of objects packed in the volume, wherein robotic bin packing requires industrial robots to implement an optimized bin packing strategy, i.e. grasping and packing the objects in the desired poses,
wherein in order to implement the optimal bin packing strategy, each grasping and packaging operation is dependent on the previous operation or operations as well as subsequent operations, wherein the method calculates different but more efficient task-relevant grasping points for the same object depending on the available storage geometry or space, wherein the same object may be grasped one way to place a first object in a bin and a second way to place a second object in the bin.

## Patentansprüche

1. Roboter (15), der in einem 3-D-Volumen (20) betreibbar ist, wobei der Roboter (15) Folgendes umfasst:
einen Greifer (35), der zwischen einer offenen Stellung und einer geschlossenen Stellung beweglich ist, um eines von mehreren Objekten (120) zu greifen;
einen gelenkig gelagerten Abschnitt (30), der an den Greifer (35) gekoppelt ist und betreibbar ist, den Greifer (35) zu einer gewünschten Position im 3-D-Volumen (20) zu bewegen;
ein Objektdetektionssystem (130), das konfiguriert ist, Informationen aufzunehmen, die die Form eines ersten Objekts (120) der mehreren Objekte angeben, das positioniert ist, durch den Greifer (35) gegriffen zu werden, wobei das Objektdetektionssystem (130) ein Bildgebungssystem (135) enthält, das konfiguriert ist, ein Bild des ersten Objekts (120) aufzunehmen; und
einen Computer (125), der an das Objektdetektionssystem gekoppelt ist, wodurch der Computer (125) konfiguriert ist, ein neuronales Netz zu betreiben, um das Bild des ersten Objekts (120) zu analysieren und mehrere mögliche Greiforte am ersten Objekt (120) zur Berücksichtigung zu erzeugen, wobei der Computer (125) konfiguriert ist, einen numerischen Parameter zu erzeugen, der die Erwünschtheit jedes Greiforts angibt, und der numerische Parameter mindestens teilweise durch die nächste Aufgabe definiert ist, die durch den Roboter (15) durchgeführt werden soll,
wobei der numerische Parameter mindestens teilweise durch die Anordnung des Greifers (35) definiert ist und wobei der Computer konfiguriert ist, einen Abschnitt der mehreren möglichen Greiforte mindestens teilweise in Reaktion auf einen verfügbaren Bewegungspfad des Greifers (35) und des gelenkig gelagerten Abschnitts im 3-D-Volumen (20) zu beseitigen, und
das neuronale Netz im Computer durch einen Anwender trainiert ist, verschiedene Formen und mögliche Greifstellungen zu erkennen, das Bildgebungssystem (135) konfiguriert ist, anschließend das Bild zu erzeugen, oder der Computer (125) konfiguriert ist, anschließend auf das Objekt, das gegriffen werden soll, zuzugreifen, wobei der Computer (125) konfiguriert ist, anschließend Informationen über den Greifer (35) und den Roboter (15) zu verwenden, um einen numerischen Parameter für jeden Greifort (191) zu erzeugen und Greifstellungen (170) zu beseitigen, die entweder durch den Greifer (35) oder den gelenkig gelagerten Abschnitt (30) des Roboters (15) nicht ausgeführt werden können, und der Computer (125) konfiguriert ist, anschließend die nächste Aufgabe, die durch den Roboter (1) durchgeführt werden soll, entweder durch einen Anwender zu empfangen oder aus einer Datenbank oder einer weiteren Quelle auf der Grundlage der Kennung des Objekts (120), das gegriffen wird, zu extrahieren,
**dadurch gekennzeichnet, dass** der Roboter konfiguriert ist, verwendet zu werden, um einen Behälter oder einen weiteren Lagerraum (210), der ein festes Volumen besitzt, zu packen, wobei dann, wenn ein Behälter oder ein weiteres Volumen gepackt wird, Objekte verschiedener Größen, Formen oder Volumen in eine endliche Anzahl von Behältern oder Containern gepackt werden müssen, um die Anzahl von verwendeten Behältern zu minimieren oder die Anzahl von Objekten, die in das Volumen gepackt werden, zu maximieren, wobei ein Packen von Behältern mittels Robotern Industrieroboter erfordert, um eine optimierte Behälterpackstrategie, d. h. ein Greifen und Packen der Objekte in den gewünschten Stellungen, zu implementieren,
wobei jede Greif- und Verpackungsoperation, um die optimale Behälterpackstrategie zu implementieren, von der vorhergehenden Operation oder den vorhergehenden Operationen sowie nachfolgenden Operationen abhängt, wobei verschiedene, jedoch effizientere für die Aufgabe relevante Greifpunkte für dasselbe Objekt abhängig von der verfügbaren Lagergeometrie oder dem verfügbaren Lagerraum durch den Computer (125) berechnet werden und dasselbe Objekt auf eine Art gegriffen werden kann, um ein erstes Objekt in einem Behälter anzuordnen, und auf eine zweite Art, um ein zweites Objekt im Behälter anzuordnen.

2. Roboter nach Anspruch 1, wobei der Computer (125) konfiguriert ist, sämtliche möglichen Greiforte, die erfordern, dass der Greifer (35) sich zu einer Stellung bewegt, die nicht zwischen der offenen Stellung und der geschlossenen Stellung ist, zu beseitigen.

3. Roboter nach Anspruch 1, wobei der numerische Parameter durch einen verfügbaren Bewegungspfad des Greifers (35) und des gelenkig gelagerten Abschnitts im 3-D-Volumen (20) definiert ist.

4. Roboter nach Anspruch 1, wobei der Computer (125) konfiguriert ist, sämtliche möglichen Greiforte, die eine Bewegung des Greifers (35) oder des beweglichen Abschnitts auf einem Pfad erfordern, der nicht im 3-D-Volumen (20) ist, zu beseitigen, und/oder die nächste Aufgabe eine Montageaufgabe ist, in der der erste Teil an einer weiteren Komponente angebracht wird.

5. Roboter nach Anspruch 1, wobei die nächste Aufgabe verwendet wird, um den numerischen Parameter derart zu gewichten, dass Greifstellungen, die den nächsten Schritt nicht erleichtern, einen niedrigeren numerischen Parameter erhalten als Greifstellungen, die den nächsten Schritt besser erleichtern, wobei der numerische Parameter verwendet wird, um die wünschenswerteste Greifstellung (175) zu wählen, und der Computer (125) die nötigen Anweisungen zum Roboter (15) liefert, um zu verursachen, dass der Roboter (15) das Objekt (120) unter Verwendung der gewählten Greifstellung greift und die nächste Aufgabe durchführt.

6. Verfahren zum Greifen eines Objekts mit einem Roboter, der in einem 3-D-Volumen beweglich ist, wobei das Verfahren Folgendes umfasst:
Verbinden eines Greifers, der zwischen einer offenen Stellung und einer geschlossenen Stellung beweglich ist, mit einem gelenkig gelagerten Abschnitt des Roboters;
Aufnehmen eines Bildes des Objekts, das gegriffen werden soll;
Betreiben eines neuronalen Netzes in einem Computer, um das Bild zu analysieren und mehrere mögliche Greiforte zur Berücksichtigung zu erzeugen;
Zuweisen eines numerischen Parameters, der die Erwünschtheit jedes Greiforts angibt, zu jedem Greifort, wobei der numerische Parameter mindestens teilweise durch die nächste Aufgabe definiert ist, die durch den Roboter durchgeführt werden soll; und
Wählen des wünschenswertesten Greiforts auf der Grundlage des numerischen Parameters und Greifen des Objekts am gewählten Greifort, wobei
das neuronale Netz im Computer verschiedene Formen und mögliche Greifstellungen erkennt, dann das Bild des Objekts, das gegriffen werden soll, erzeugt oder auf es zugegriffen wird, der Computer Informationen über den Greifer und den Roboter verwendet, um den numerischen Parameter für jeden Greifort zu erzeugen und Greifstellungen zu beseitigen, die entweder durch den Greifer oder den gelenkig gelagerten Abschnitt des Roboters nicht ausgeführt werden können, dann die nächste Aufgabe, die durch den Roboter durchgeführt werden soll, entweder durch einen Anwender bereitgestellt oder aus einer Datenbank oder einer weitere Quelle auf der Grundlage der Kennung des Objekts, das gegriffen wird, extrahiert wird,
die nächste Aufgabe verwendet wird, um den numerischen Parameter derart zu gewichten, dass Greifstellungen, die den nächsten Schritt nicht erleichtern, einen niedrigeren numerischen Parameter erhalten als Greifstellungen, die den nächsten Schritt besser erleichtern, wobei der numerische Parameter verwendet wird, um die wünschenswerteste Greifstellung zu wählen, und der Computer die nötigen Anweisungen zum Roboter liefert, um zu verursachen, dass der Roboter das Objekt unter Verwendung der gewählten Greifstellung greift und die nächste Aufgabe durchführt, **dadurch gekennzeichnet, dass** der Roboter verwendet wird, um einen Behälter oder einen weiterer Lagerraum, der ein festes Volumen besitzt, zu packen,
wobei dann, wenn ein Behälter oder ein weiteres Volumen gepackt wird, Objekte verschiedener Größen, Formen oder Volumen in eine endliche Anzahl von Behältern oder Containern gepackt werden müssen, um die Anzahl von verwendeten Behältern zu minimieren oder die Anzahl von Objekten, die in das Volumen gepackt werden, zu maximieren, wobei ein Packen von Behältern mittels Robotern Industrieroboter erfordert, um eine optimierte Behälterpackstrategie, d. h. ein Greifen und Packen der Objekte in den gewünschten Stellungen, zu implementieren, und
wobei jede Greif- und Verpackungsoperation, um die optimale Behälterpackstrategie zu implementieren, von der vorhergehenden Operation oder den vorhergehenden Operationen sowie nachfolgenden Operationen abhängt, wobei das Verfahren verschiedene jedoch effizientere für die Aufgabe relevante Greifpunkte für dasselbe Objekt abhängig von der verfügbaren Lagergeometrie oder dem verfügbaren Lagerraum berechnet und dasselbe Objekt auf eine Art gegriffen werden kann, um ein erstes Objekt in einem Behälter anzuordnen, und auf eine zweite Art, um ein zweites Objekt im Behälter anzuordnen.

## Revendications

1. Robot (15) utilisable dans un volume 3D (20), le robot (15) comprenant :
une pince (35) mobile entre une position ouverte et une position fermée pour saisir un objet quelconque parmi une pluralité d'objets (120) ;
une partie articulée (30) couplée à la pince (35) et capable de déplacer la pince (35) vers une position souhaitée à l'intérieur du volume 3D (20) ;
un système de détection d'objet (130) configuré pour capturer des informations indicatives de la forme d'un premier objet (120) de la pluralité d'objets positionnés pour être saisis par la pince (35), le système de détection d'objet (130) comprenant un système d'imagerie (135) configuré pour capturer une image du premier objet (120) ; et
un ordinateur (125) couplé au système de détection d'objet, l'ordinateur (125) étant configuré pour faire fonctionner un réseau neuronal afin d'analyser l'image du premier objet (120) et de générer une pluralité d'emplacements de saisie possibles sur le premier objet (120) à prendre en considération, l'ordinateur (125) étant configuré pour générer un paramètre numérique indiquant le caractère souhaitable de chaque emplacement de saisie, le paramètre numérique étant au moins partiellement défini par la prochaine tâche à effectuer par le robot (15),
dans lequel le paramètre numérique est au moins partiellement défini par la disposition de la pince (35), et dans lequel l'ordinateur est configuré pour éliminer une partie de la pluralité d'emplacements de saisie possibles au moins partiellement en réponse à une trajectoire de mouvement disponible de la pince (35) et de la partie articulable à l'intérieur du volume 3D (20),
dans lequel le réseau neuronal de l'ordinateur est entraîné par un utilisateur à reconnaître différentes formes et positions de saisie potentielles, le système d'imagerie (135) est configuré pour générer ultérieurement ou l'ordinateur (125) est configuré pour accéder ultérieurement à l'image de l'objet à saisir, l'ordinateur (125) est configuré pour utiliser ultérieurement les informations relatives à la pince (35) et au robot (15) afin de générer un paramètre numérique pour chaque emplacement de saisie (191) et d'éliminer les positions de saisie (170) qui ne peuvent être réalisées ni par la pince (35) ni par la partie articulée (30) du robot (15), l'ordinateur (125) est configuré pour recevoir ultérieurement, soit d'un utilisateur, soit d'une base de données ou d'une autre source, la prochaine tâche à réaliser par le robot (1) sur la base de l'identification de l'objet (120) à saisir,
**caractérisé en ce que** le robot est configuré pour être utilisé pour empaqueter un bac ou un autre espace de stockage (210) ayant un volume fixe, où lors de l'empaquetage d'un bac ou d'un autre volume, des objets de différentes tailles, formes ou volumes doivent être empaquetés dans un nombre fini de bacs ou de conteneurs, de manière à minimiser le nombre de bacs utilisés ou à maximiser le nombre d'objets empaquetés dans le volume, où l'empaquetage robotisé de bacs nécessite que les robots industriels mettent en œuvre une stratégie optimisée d'empaquetage de bacs, c'est-à-dire qu'ils saisissent et empaquettent les objets dans les positions souhaitées,
dans lequel, de manière à mettre en œuvre la stratégie optimale d'empaquetage des bacs, chaque opération de saisie et d'empaquetage dépend des une ou plusieurs opérations précédentes ainsi que des opérations suivantes, dans lequel des points de saisie différents mais plus efficaces pour le même objet en fonction de la géométrie ou de l'espace de stockage disponibles sont calculés par l'ordinateur (125), le même objet pouvant être saisi d'une certaine manière pour placer un premier objet dans un bac et d'une deuxième manière pour placer un deuxième objet dans le bac.

2. Robot selon la revendication 1, dans lequel l'ordinateur (125) est configuré pour éliminer tous les emplacements de saisie possibles qui nécessitent que la pince (35) se déplace dans une position qui n'est pas comprise entre la position ouverte et la position fermée.

3. Robot selon la revendication 1, dans lequel le paramètre numérique est défini par une trajectoire de mouvement disponible de la pince (35) et de la partie articulable à l'intérieur du volume 3D (20).

4. Robot selon la revendication 1, dans lequel l'ordinateur (125) est configuré pour éliminer tous les emplacements de saisie possibles qui nécessitent un mouvement de la pince (35) ou de la partie articulable le long d'une trajectoire qui n'est pas à l'intérieur du volume 3D (20) et/ou, dans lequel la tâche suivante est une tâche d'assemblage dans laquelle la première pièce est attachée à un autre composant.

5. Robot selon la revendication 1, dans lequel la tâche suivante est utilisée pour pondérer le paramètre numérique de sorte que les positions de saisie qui ne facilitent pas l'étape suivante reçoivent un paramètre numérique inférieur aux positions de saisie qui facilitent davantage l'étape suivante, dans lequel le paramètre numérique est utilisé pour sélectionner la position de saisie la plus souhaitable (175), dans lequel l'ordinateur (125) fournit les commandes nécessaires au robot (15) pour amener le robot (15) à saisir l'objet (120) en utilisant la position de saisie sélectionnée et à exécuter la tâche suivante.

6. Procédé de saisie d'un objet avec un robot qui est mobile à l'intérieur d'un volume 3-D, le procédé comprenant les étapes suivantes :
connecter une pince, qui est mobile entre une position ouverte et une position fermée, à une partie articulée du robot ;
capturer une image de l'objet à saisir ;
exploiter un réseau neuronal sur un ordinateur pour analyser l'image et générer une pluralité d'emplacements de saisie possibles à prendre en considération ;
attribuer un paramètre numérique indicatif du caractère souhaitable de chaque emplacement de saisie à chaque emplacement de saisie, le paramètre numérique étant au moins partiellement défini par la prochaine tâche à effectuer par le robot ;
sélectionner l'emplacement de saisie le plus souhaitable sur la base du paramètre numérique ; et saisir l'objet dans l'emplacement de saisie sélectionné,
dans lequel le réseau neuronal de l'ordinateur reconnaît différentes formes et positions de saisie potentielles, puis l'image de l'objet à saisir est générée ou consultée, l'ordinateur utilise des informations sur la pince et le robot pour générer le paramètre numérique pour chaque position de saisie et pour éliminer les positions de saisie qui ne peuvent pas être réalisées par la pince ou la partie articulée du robot, puis la prochaine tâche à réaliser par le robot est soit fournie par un utilisateur, soit extraite d'une base de données ou d'une autre source sur la base de l'identification de l'objet à saisir, dans lequel la tâche suivante est utilisée pour pondérer le paramètre numérique de sorte que les positions de saisie qui ne facilitent pas l'étape suivante reçoivent un paramètre numérique inférieur à celui des positions de saisie qui facilitent davantage l'étape suivante, le paramètre numérique étant utilisé pour sélectionner la position de saisie la plus souhaitable, dans lequel l'ordinateur fournit les commandes nécessaires au robot pour amener le robot à saisir l'objet à l'aide de la position de saisie sélectionnée et à exécuter la tâche suivante, **caractérisé en ce que** le robot est utilisé pour empaqueter un bac ou un autre espace de stockage ayant un volume fixe,
dans lequel, lors de l'empaquetage d'un bac ou d'un autre volume, des objets de tailles, de formes ou de volumes différents doivent être empaquetés dans un nombre fini de bacs ou de conteneurs, de manière à minimiser le nombre de bacs utilisés ou à maximiser le nombre d'objets empaquetés dans le volume, l'empaquetage robotisé de bacs exigeant des robots industriels qu'ils mettent en œuvre une stratégie optimisée d'empaquetage de bacs, c'est-à-dire qu'ils saisissent et empaquettent les objets dans les positions souhaitées,
dans lequel, de manière à mettre en œuvre la stratégie optimale d'empaquetage des bacs, chaque opération de saisie et d'empaquetage dépend des une ou plusieurs opérations précédentes ainsi que des opérations suivantes, le procédé calculant des points de saisie différents mais plus efficaces pour le même objet en fonction de la géométrie ou de l'espace de stockage disponibles, le même objet pouvant être saisi d'une certaine manière pour placer un premier objet dans un bac et d'une deuxième manière pour placer un deuxième objet dans le bac.
